# FASCICULE DE BREVET EUROPEEN

(11) **EP 2 599 376 B1**
(45) Date de publication et mention de la délivrance du brevet: **21.10.2015**
(21) Numéro de dépôt: 12193159.6
(22) Date de dépôt: 19.11.2012
(51) Int. Cl.: A01D 78/10, A01D 80/00, A01D 78/12

(54) **Machine de fenaison**
Heuwerbungsmaschine
Haymaking machine

(30) Priorité: 30.11.2011 FR 1160945
(43) Date de publication de la demande: 05.06.2013
(73) Titulaire: KUHN S.A., 67700 Saverne (FR)
(72) Inventeur: Speich, Cédric, 67500 Haguenau (FR)

(56) Documents cités:
- EP-A1- 0 403 409
- DE-A1-102004 036 671
- FR-A1- 2 386 248
- FR-A1- 2 910 233

## Description

La présente invention se rapporte à une machine de fenaison comportant au moins un rotor muni de bras portant des outils de travail. Sur des machines de fenaison connues de ce genre, durant le travail lesdits bras tournent autour d'un axe lors de chaque révolution dudit rotor au moyen d'un mécanisme incluant une came de commande immobile situé à l'intérieur dudit rotor. Lesdits bras déplacent alors lesdits outils de travail d'une position de râtelage des produits étendus au sol dans une position pour la dépose des produits ramassés et inversement. Lesdits bras présentent généralement une grande longueur afin de ramasser et déplacer une grande quantité de produits. Toutefois, la largeur et la hauteur de la machine au transport étant réglementées, en général, au moins l'un desdits bras est fractionné en une première partie portant lesdits outils de travail et une deuxième partie liée audit rotor, et lesdites parties peuvent être reliées entre elles au moyen d'un dispositif d'accouplement.

Sur une première machine du type décrit précédemment, connue du document DE 10 2004 036 671 A1, le dispositif d'accouplement peut permettre auxdites première et deuxième parties de coulisser l'une par rapport à l'autre. Lesdites parties peuvent ainsi être emmanchées l'une dans l'autre pour le travail, et séparées l'une de l'autre pour le transport. Alternativement, sur une deuxième machine connue du document EP 0 403 409 A1, ledit dispositif d'accouplement peut permettre auxdites parties d'être pivotées l'une par rapport à l'autre pour le transport. Ledit bras présente ainsi une longueur réduite.

Sur ces deux machines connues, pour le travail, lesdites première et deuxième parties sont reliées l'une à l'autre et ledit dispositif d'accouplement autorise la transmission de l'une vers l'autre d'un couple de rotation autour dudit axe. De cette manière, l'entraînement en rotation de ladite deuxième partie par ledit mécanisme situé à l'intérieur dudit rotor, est transmis à ladite première partie de sorte que lesdits outils de travail soient déplacés ainsi qu'il a été décrit plus haut. De manière connue, ledit dispositif d'accouplement comprend un moyen de butée et un moyen de tension. Ledit moyen de butée coopère avec ledit moyen de tension. Au travail, ledit moyen de tension est amené dans une position opérationnelle dans laquelle il exerce sur ledit moyen de butée un effort orienté de l'une vers l'autre desdites première et deuxième parties. Il en résulte que dans ladite position opérationnelle, ladite première partie est, au moins suivant une direction sensiblement parallèle audit axe, immobile par rapport à ladite deuxième partie. Ledit moyen de butée comporte au moins deux portions d'appui, une première portion d'appui liée à ladite première partie et une deuxième portion d'appui liée à ladite deuxième partie. Ainsi, lors d'une révolution dudit rotor, ladite deuxième partie, soumise notamment à l'accélération centrifuge, ne peut pas se déplacer par rapport à ladite première partie au moins suivant ledit axe.

Toutefois, sur les machines connues, ledit dispositif d'accouplement transmet ledit couple de rotation autour dudit axe de l'une vers l'autre desdites parties, mais maintient un jeu de rotation autour dudit axe entre lesdites parties. Un premier cas est celui connu du document DE 10 2004 036 671 A1, où ledit dispositif d'accouplement comporte une liaison glissière qui permet, par exemple au moyen de cannelures, d'emboîter une desdites première et deuxième parties dans l'autre. Dans ce cas, ledit jeu de rotation est d'une part requis pour que l'utilisateur puisse accoupler facilement lesdites parties entre elles, d'autre part une conséquence des tolérances de fabrication desdites parties, lesdites tolérances ne permettant pas d'obtenir une liaison coulissante exempte dudit jeu de rotation. Dans un second cas connu du document EP 0 403 409 A1, où ledit dispositif d'accouplement permet auxdites parties d'être pivotées l'une par rapport à l'autre, une articulation est prévue entre lesdites parties et elle n'est pas exempte de jeu.

Ledit jeu de rotation autorise lesdites parties à tourner légèrement l'une par rapport à l'autre autour dudit axe entre deux positions extrêmes. Or, pendant le travail et lors de chaque révolution dudit rotor, ladite came impose à ladite deuxième partie une phase d'accélération angulaire positive suivie d'une phase d'accélération angulaire négative. Ladite première partie subit lesdites accélérations mais, en raison de sa propre inertie, elle réagit avec un léger retard. Il en résulte qu'au gré des accélérations tantôt positives, tantôt négatives, ledit jeu de rotation est rattrapé en direction tantôt de l'une, tantôt de l'autre desdites positions extrêmes. Par la suite, il se produit des chocs qui sont notamment source de bruits désagréables pour l'utilisateur. Ces chocs accélèrent également l'usure de la machine, notamment parce qu'ils induisent un matage des surfaces de ladite liaison coulissante ou de ladite articulation. Au final, ledit jeu de rotation augmente avec la durée d'utilisation de la machine. Ni le moyen de butée, ni le moyen de tension, dont sont munies les machines connues, ne permettent de rattraper ce jeu de rotation.

La présente invention a pour but de proposer une machine de fenaison qui ne présente pas les inconvénients précités.

A cet effet, une importante caractéristique de l'invention réside dans le fait que ladite première portion d'appui comporte au moins une première face d'appui inclinée par rapport audit axe, que ladite deuxième portion d'appui comporte au moins une deuxième face d'appui inclinée par rapport audit axe, et que dans ladite position opérationnelle, ledit effort maintient en contact ladite au moins une première face d'appui contre ladite au moins une deuxième face d'appui de sorte que, dans ladite position opérationnelle, l'immobilisation de ladite première partie par rapport à ladite deuxième partie suivant ledit axe entraîne simultanément une immobilisation de ladite première partie par rapport à ladite deuxième partie autour dudit axe.

Ainsi, lorsque l'utilisateur place ledit moyen de tension dans ladite position opérationnelle, il immobilise d'un seul geste ladite première partie par rapport à ladite deuxième partie à la fois suivant ledit axe et autour dudit axe. Le dispositif d'accouplement selon l'invention permet donc de rattraper ledit jeu de rotation entre lesdites parties en même temps que ces dernières sont mises en butée axialement l'une contre l'autre, et par conséquent de réaliser une parfaite transmission du couple de rotation. Que ledit dispositif d'accouplement comporte une liaison pivotante entres lesdites première et deuxième parties ou bien une liaison coulissante entre ces dernières, dans les deux cas, lesdites liaisons peuvent être réalisées avec des tolérances de fabrication normales. Ces dernières autorisent de fait l'existence dudit jeu de rotation mais, au travail, celui-ci est rattrapé et n'est donc nullement gênant. De plus, les chocs mentionnés plus haut sont évités, ce qui augmente à la fois l'agrément d'utilisation et la durée de vie de la machine. Avantageusement, ledit moyen de tension comporte un moyen de réglage qui permet d'ajuster ledit effort. Ainsi, l'utilisateur peut à tout moment intervenir sur ledit moyen de réglage de façon à ce que ledit effort soit suffisant pour assurer l'immobilisation desdites première et deuxième parties entre elles à la fois suivant ledit axe et autour dudit axe.

D'autres caractéristiques et avantages de l'invention ressortiront de la description ci-après avec référence aux dessins annexés qui représentent, à titre d'exemple non limitatif, plusieurs formes de réalisation du dispositif de ramassage selon l'invention.

Sur ces dessins :
- la figure 1 représente une vue de dessus d'une machine de fenaison conforme à l'invention, comportant au moins un rotor muni de bras ;
- la figure 2 représente une vue de détail en perspective d'un bras suivant une première variante de réalisation, dans ladite position opérationnelle ;
- la figure 3 représente une vue de détail en perspective d'un bras suivant la première variante de réalisation, dans une position déverrouillée ;
- la figure 4 représente une vue de détail en perspective d'un bras suivant une deuxième variante de réalisation, dans ladite position opérationnelle ;
- la figure 5 représente une vue de détail en perspective d'un bras suivant la deuxième variante de réalisation, dans une position déverrouillée ;
- la figure 6 représente une vue de détail d'un bras suivant une troisième variante de réalisation, dans ladite position opérationnelle ;
- la figure 7 représente une vue de détail en perspective d'un bras suivant la troisième variante de réalisation, dans une position déverrouillée ;
- la figure 8 représente une vue de détail en perspective d'un bras suivant une quatrième variante de réalisation, dans ladite position opérationnelle ;
- la figure 9 représente une vue de détail en perspective d'un bras suivant la quatrième variante de réalisation, dans une position déverrouillée ;
- la figure 10 représente une vue de détail en coupe partielle d'un bras suivant une cinquième variante de réalisation, dans ladite position opérationnelle ;
- la figure 11 représente une vue de détail en perspective d'un bras suivant la cinquième variante de réalisation, dans une position déverrouillée ;
- la figure 12 représente une vue de détail en perspective d'un bras suivant une sixième variante de réalisation, dans une position déverrouillée ;
- la figure 13 représente une vue de détail en coupe d'un bras suivant la première variante de réalisation ;
- la figure 14 représente une vue de détail en perspective d'un bras suivant une septième variante de réalisation ;
- la figure 15 représente une vue de détail en perspective d'un bras suivant une huitième variante de réalisation, dans ladite position opérationnelle ;
- la figure 16 représente une vue de détail en perspective d'un bras suivant la huitième variante de réalisation, dans une position déverrouillée ;
- la figure 17 représente une vue de détail en perspective d'un bras suivant une neuvième variante de réalisation, dans une position déverrouillée ;

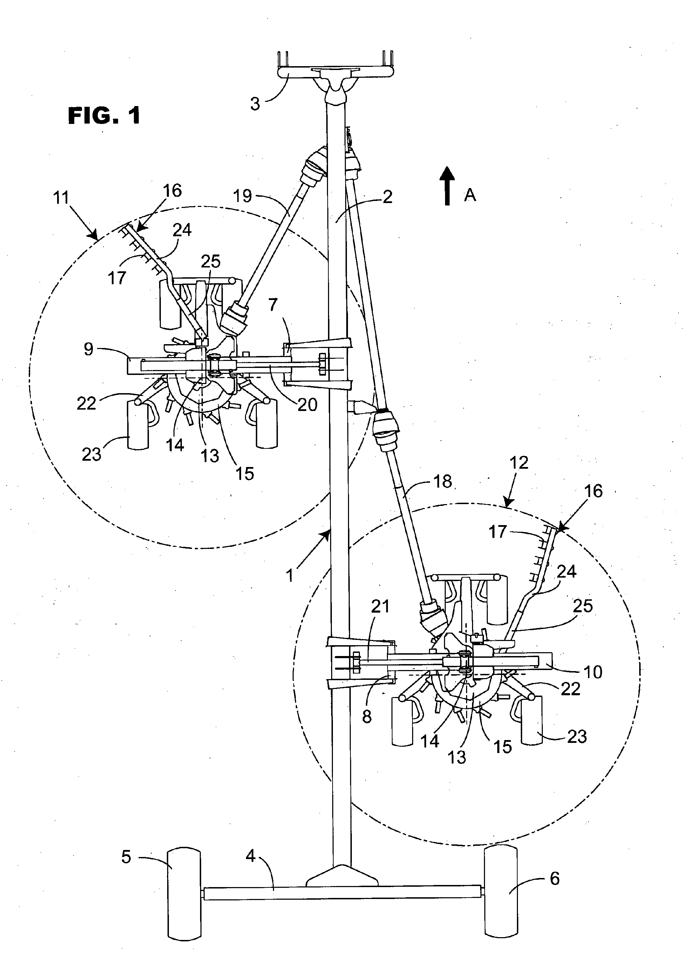

Telle qu'elle est représentée sur la figure 1, la machine selon l'invention est une andaineuse de végétaux couchés sur le sol. Elle comporte une structure porteuse (1) constituée par une poutre centrale (2) qui possède à son extrémité avant un dispositif d'attelage (3) pour l'accrocher à un tracteur, non représenté, permettant de déplacer la machine dans une direction d'avancement (A). Ladite poutre centrale (2) possède à son extrémité arrière une traverse (4) munie de roues (5 et 6) qui roulent sur le sol. Sur chaque côté de ladite poutre centrale (2) est articulé, au moyen d'un axe (7, 8) sensiblement horizontal, un bras (9,10) qui porte une roue râteleuse (11, 12). Dans l'exemple représenté, lesdits bras (9, 10) et lesdites roues râteleuses (11, 12) correspondantes sont décalés dans la direction d'avancement (A). Les végétaux andainés par la roue râteleuse (11) la plus en avant peuvent être repris par la roue râteleuse (12) la plus en arrière pour la formation d'un andain unique de plus grand volume.

Ladite poutre centrale (2) pourrait ne comporter qu'un seul bras et qu'une seule roue râteleuse. Elle pourrait aussi ne comporter aucun bras et qu'une seule roue râteleuse portée directement par ladite poutre centrale (2). Ladite poutre centrale (2) pourrait aussi comporter, de chaque côté, deux bras avec des longueurs différentes et portant chacun une roue râteleuse. Dans ce cas, la machine comporterait quatre roues râteleuses qui lui permettraient d'atteindre une largeur de travail plus importante.

Lesdites roues râteleuses (11 et 12) sont sensiblement identiques. Chacune comporte un carter (13) dans lequel est fixé un axe support (14) sensiblement vertical en position de travail. Sous ledit carter (13) est disposé un rotor (15) avec des bras (16) qui s'étendent vers l'extérieur et qui sont équipés d'outils de travail (17) tels que des fourches. Ledit rotor (15) est monté sur ledit axe support (14) de manière à pouvoir tourner sur celui-ci. Lesdits bras (16) sont guidés dans des paliers solidaires dudit rotor (15) de sorte qu'ils puissent pivoter sensiblement autour de leurs axes géométriques longitudinaux respectifs. A l'intérieur dudit rotor (15) est prévue une came de commande immobile qui est fixée sur ledit axe support (14). Chaque bras (16) comporte à son extrémité qui est située dans ledit rotor (15) un levier avec un galet qui est guidé dans ladite came. Lesdits bras (16) sont ainsi commandés de sorte que leurs outils de travail (17) ramassent les végétaux notamment sur la partie avant de leur trajectoire et les déposent sous la forme d'un andain dans la partie latérale de leur trajectoire.

Dans ledit carter (13) de chaque roue râteleuse (11, 12) sont logés des moyens pour entraîner ledit rotor (15) en rotation sur ledit axe support (14). Lesdits moyens sont constitués par une couronne dentée qui est solidaire de la partie supérieure dudit rotor (15) et par un pignon d'entraînement qui engrène avec ladite couronne. Ledit pignon est lié à un arbre qui s'étend hors dudit carter (13). Sur ledit arbre est branché un arbre de transmission (18, 19) qui peut être réalisé en plusieurs parties et qui est animé à partir de l'arbre de prise de force du tracteur. L'entraînement en rotation dudit rotor (15) de chaque roue râteleuse (11, 12) pourrait également être effectué avec un moteur hydraulique ou électrique.

Ledit bras (9, 10) de chaque roue râteleuse (11, 12) est équipé d'un vérin hydraulique (20, 21) qui permet de le pivoter autour dudit axe d'articulation (7, 8). Chaque vérin hydraulique (20, 21) est articulé avec une de ses extrémités sur ladite poutre centrale (2) et avec son autre extrémité sur ledit bras (9, 10) correspondant. Chaque vérin hydraulique (20, 21) peut être à double effet de manière à pouvoir être commandé lors de l'allongement et lors du raccourcissement, et permet de déplacer ledit bras (9, 10) correspondant entre une position de transport et une position de travail. Dans ladite position de transport, chaque roue râteleuse (11, 12) s'étend dans un plan sensiblement vertical ou proche de la verticale, de sorte que l'encombrement de la machine est réduit en largeur. Dans ladite position de travail, chaque roue râteleuse (11, 12) s'étend dans un plan sensiblement horizontal.

Ledit axe support (14) de chaque roue râteleuse (11, 12) est muni à son extrémité inférieure d'un bâti (22) avec plusieurs roues d'appui (23) au sol. Ces dernières roulent sur le sol durant le travail et font suivre les dénivellations du sol auxdites roues râteleuses (11, 12).

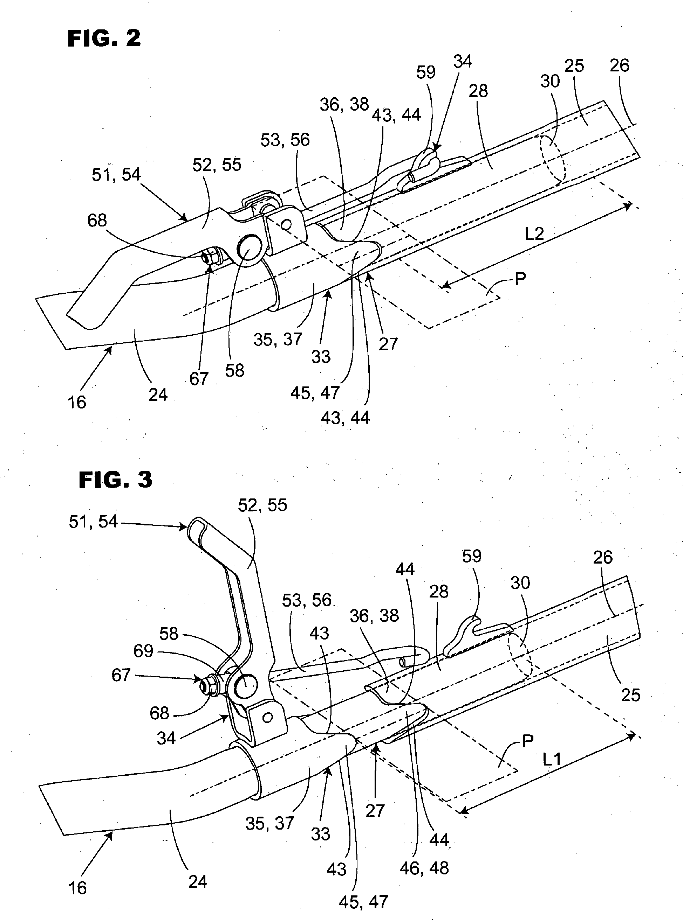

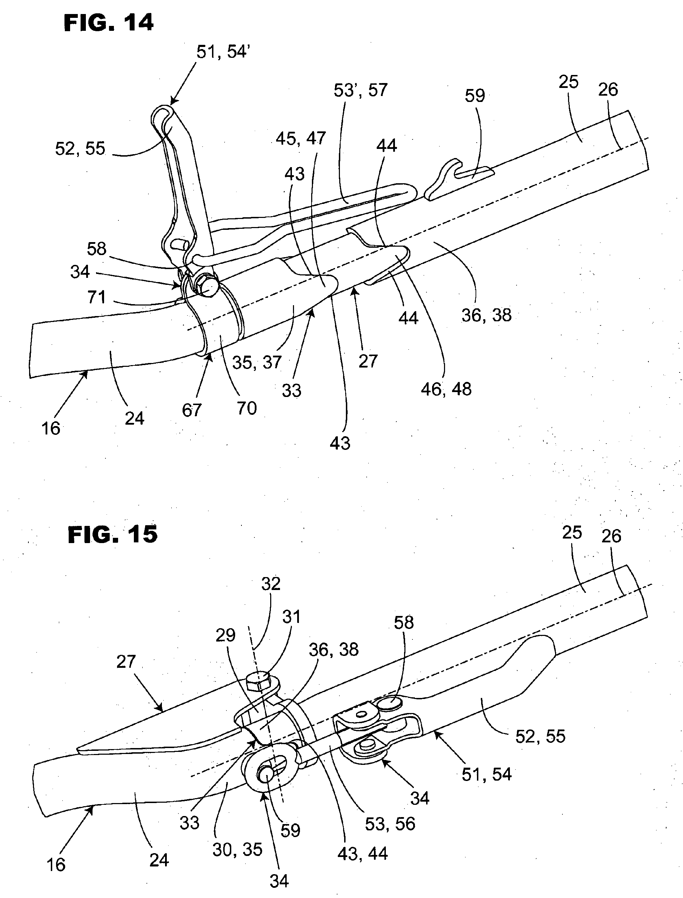

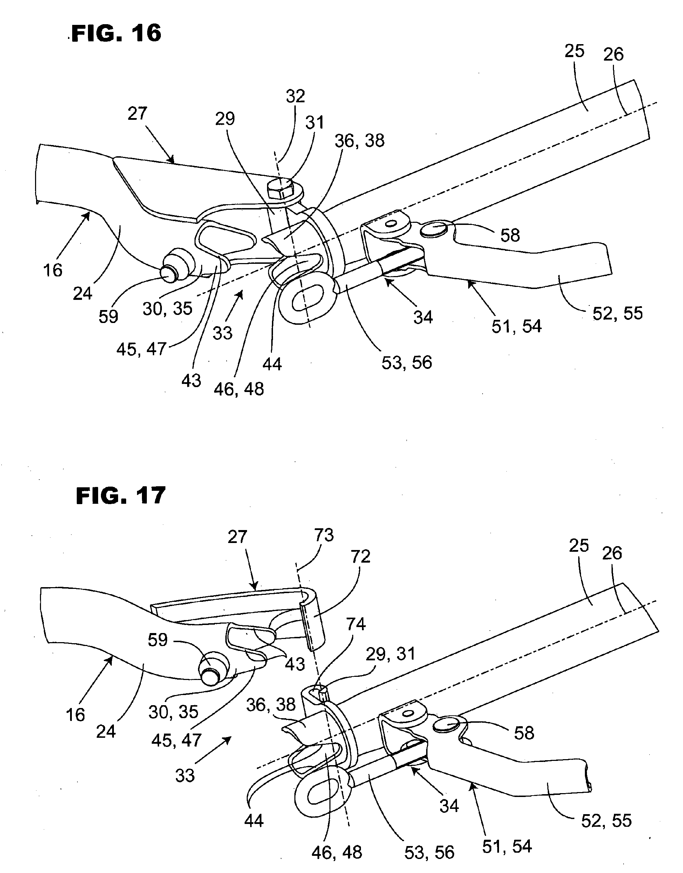

Au moins l'un desdits bras (16) comporte au moins deux parties, à savoir une première partie (24) portant lesdits outils de travail (17) et une deuxième partie (25) liée audit rotor (15). Ainsi, lesdites première et deuxième parties (24, 25) peuvent être déplacées l'une par rapport à l'autre de sorte que ladite roue râteleuse (12) ait un encombrement plus faible dans ladite position de transport que dans ladite position de travail, de sorte que la hauteur totale de la machine au transport soit réduite. Dans le cas où la machine ne comporte qu'une seule roue râteleuse portée par ladite poutre centrale (2), lesdites première et deuxième parties peuvent être déplacées l'une par rapport à l'autre de manière à réduire la largeur de la machine en vue du transport. Ladite deuxième partie (25) est guidée dans lesdits paliers de sorte qu'elle puisse pivoter autour d'un axe (26) orienté suivant une direction longitudinale de ladite deuxième partie (25). Un dispositif d'accouplement (27) autorise un déplacement desdites première et deuxième parties (24, 25) l'une par rapport à l'autre et comprend des moyens pour relier lesdites première et deuxième parties (24, 25) entre elles. Lesdits moyens peuvent notamment être formés par une liaison coulissante (28) ou par une liaison pivotante (29). Un exemple de liaison coulissante (28) est donné par la première variante de réalisation des figures 2 et 3. Ladite première partie (24), de forme tubulaire, comporte une extrémité (30) qui s'engage à l'intérieur de ladite deuxième partie (25), dont la forme est celle d'un tube creux dont le diamètre intérieur est légèrement supérieur à celui de ladite première partie (24). Un exemple de liaison pivotante (29) est donné par la huitième variante de réalisation des figures 15 et 16. Ladite liaison pivotante (29) est formée par une articulation (31) qui relie lesdites première et deuxième parties (24, 25). Ladite articulation (31) comporte un axe d'articulation (32) positionné à l'extérieur desdites première et deuxième parties (24, 25) et qui s'étend suivant une direction perpendiculaire audit axe (26).

Ledit dispositif d'accouplement (27) autorise la transmission de l'une vers l'autre desdites première et deuxième parties (24, 25) d'un couple de rotation autour dudit axe (26). A cet effet, ledit dispositif d'accouplement (27) comprend un moyen de butée (33) et un moyen de tension (34). Ledit moyen de butée (33) permet de mettre en contact lesdites première et deuxième parties (24, 25) entre elles au moins suivant une direction parallèle audit axe (26). Ledit moyen de tension (34) peut être placé dans une position opérationnelle où il exerce sur ledit moyen de butée (33) un effort orienté de l'une vers l'autre desdites première et deuxième parties (24, 25). Ainsi, dans ladite position opérationnelle, ladite première partie (24) est, au moins suivant une direction parallèle audit axe (26), immobile par rapport à ladite deuxième partie (25).

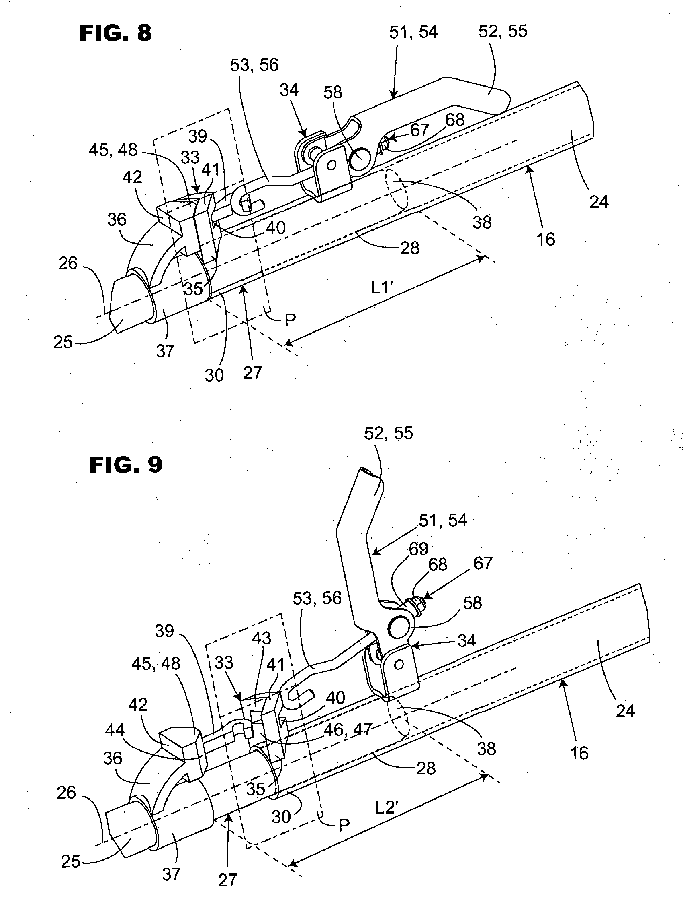

Ledit moyen de butée (33) comporte au moins deux portions d'appui, à savoir une première portion d'appui (35) liée à ladite première partie (24) et une deuxième portion d'appui (36) liée à ladite deuxième partie (25). Dans les variantes de réalisation illustrées par les figures 2 à 7 et 10 à 14, ladite première portion d'appui (35) est formée par un manchon (37) solidaire de ladite première partie (24), par exemple par soudage ou par emmanchement en force. Ladite deuxième portion d'appui (36) est formée par l'extrémité (38) de ladite deuxième partie (25) orientée en direction de ladite première partie (24). Dans les variantes de réalisation des figures 15 à 17, lesdites première et deuxième portions d'appui (35, 36) comportent chacune une extrémité (30, 38) de ladite première ou deuxième partie (24 ou 25) correspondante. Dans la quatrième variante de réalisation des figures 8 et 9, ladite première partie (24) comporte une languette (39) qui s'engage à l'intérieur d'une fente (40) pratiquée dans une plaquette (41) solidaire de ladite deuxième partie (25). Ladite languette (39) comporte une plaque d'appui (42) qui vient en contact avec ladite plaquette (41) lorsque ledit moyen de tension (34) est placé dans ladite position opérationnelle. Dans cette variante de réalisation, ladite première portion d'appui (35) comprend au moins ladite plaquette (41) tandis que ladite deuxième portion d'appui (36) comprend au moins ladite plaque d'appui (42).

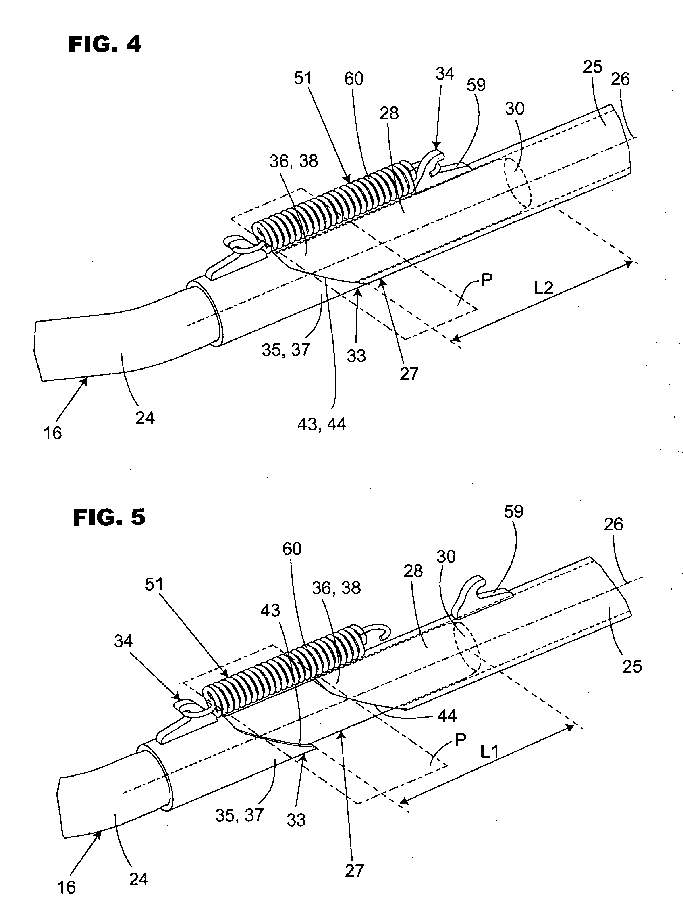

En sus, ladite première portion d'appui (35) comporte au moins une première face d'appui (43) inclinée par rapport audit axe (26), et ladite deuxième portion d'appui (36) comporte au moins une deuxième face d'appui (44) inclinée par rapport audit axe (26). Ainsi, dans les variantes de réalisation illustrées par les figures 2, 3, 6, 7, 10, 11 et 14, le manchon (37) solidaire de ladite première partie (24) comporte au moins un élément en forme de pointe (45). Cette pointe (45) est munie sur son pourtour d'au moins une première face d'appui (43). L'extrémité (38) de ladite deuxième partie (25), orientée en direction dudit manchon (37), est découpée en un creux (46) de sorte qu'elle comprenne une deuxième face d'appui (44) qui peut coopérer avec ladite première face d'appui (43). Ainsi qu'il ressort des figures, lesdites première et deuxième faces d'appui (43, 44) sont inclinées par rapport audit axe (26). La quatrième variante de réalisation, visible sur les figures 8 et 9, diffère des précédentes notamment en ce que lesdites formes de pointe (45) et de creux (46) sont reportées respectivement au niveau de ladite plaque d'appui (42) et de ladite plaquette (41). Dans la deuxième variante de réalisation, représentée sur les figures 4 et 5, lesdites première et deuxième portions d'appui (35, 36) sont biseautées, en sorte qu'elles présentent chacune une seule face d'appui (43 ou 44) inclinée par rapport audit axe. Dans cette variante de réalisation, l'angle que forme chaque face d'appui (43, 44) par rapport audit axe (26) est identique pour les deux faces d'appui (43 et 44), de manière à ce que l'une coopère avec l'autre dans ladite position opérationnelle. Dans la huitième variante de réalisation des figures 15 et 16, l'extrémité (30) de ladite première partie (24) comporte au moins un élément en forme de pointe (45) qui coopère avec une forme de creux (46) découpée dans ladite deuxième partie (25). Dans cette variante de réalisation, lesdites faces d'appui (43, 44) présentent une largeur assez faible qui correspond à l'épaisseur de matière du tube que comportent lesdites première et deuxième parties (24, 25). Néanmoins, il serait possible que l'extrémité dudit tube soit pleine, de sorte que lesdites faces d'appui (43, 44) aient une largeur voisine du diamètre dudit tube.

Sur les figures 2, 4, 6, 8, 10 et 15, les variantes de réalisation décrites précédemment sont représentées dans ladite position opérationnelle. Il ressort clairement que dans cette position, ladite au moins une première face d'appui (43) est maintenue en contact contre ladite au moins une deuxième face d'appui (44). Ce maintien en contact est réalisé par l'effort exercé par ledit moyen de tension. L'inclinaison desdites première et deuxième faces d'appui (43, 44) par rapport audit axe (26) implique que, dans ladite position opérationnelle, l'immobilisation de ladite première partie (24) par rapport à ladite deuxième partie (25) suivant ledit axe (26) entraîne simultanément une immobilisation de ladite première partie (24) par rapport à ladite deuxième partie (25) autour dudit axe (26). Sur les figures 3, 5, 7, 9, 11, 12, 14, 16 et 17, ledit moyen de tension (34) est placé dans une position déverrouillée et lesdites première et deuxième parties (24, 25) peuvent alors être déplacées l'une par rapport à l'autre. Un jeu de rotation peut alors exister entre lesdites première et deuxième parties (24, 25). Ainsi, dans la huitième variante de réalisation illustrée à la figure 16, il provient du jeu qui existe au niveau dudit axe d'articulation (32) de ladite liaison pivotante (29). Dans les variantes de réalisation représentées sur les figures 2 à 14, ledit jeu de rotation vient du fait que ladite liaison coulissante (28) est en fait une liaison pivot glissant formée par un tube lisse s'engageant dans un autre tube lisse. Néanmoins, une telle liaison pivot glissant peut aussi être obtenue avec des tubes présentant un aspect de surface quelconque, par exemple rugueux, strié ou autre. Dans ladite position opérationnelle, ledit jeu de rotation est rattrapé, puisque lesdites première et deuxième parties (24, 25) sont immobilisées autour dudit axe (26) en même temps que ces dernières sont mises en butée axialement l'une contre l'autre.

Préférentiellement, ladite première portion d'appui (35) comprend au moins une paire (47) de premières faces d'appui (43) inclinées par rapport audit axe (26) de manière à former un V, ladite deuxième portion d'appui (36) comprend au moins une paire (48) de deuxièmes faces d'appui (44) inclinées par rapport audit axe (26) de manière à former un V, et dans ladite position opérationnelle, ladite au moins une paire (47) de premières faces d'appui (43) coopère avec ladite au moins une paire (48) de deuxièmes faces d'appui (44). Dans ladite position opérationnelle, lesdites premières et deuxièmes faces d'appui (43, 44) s'étendent suivant ledit axe (26).

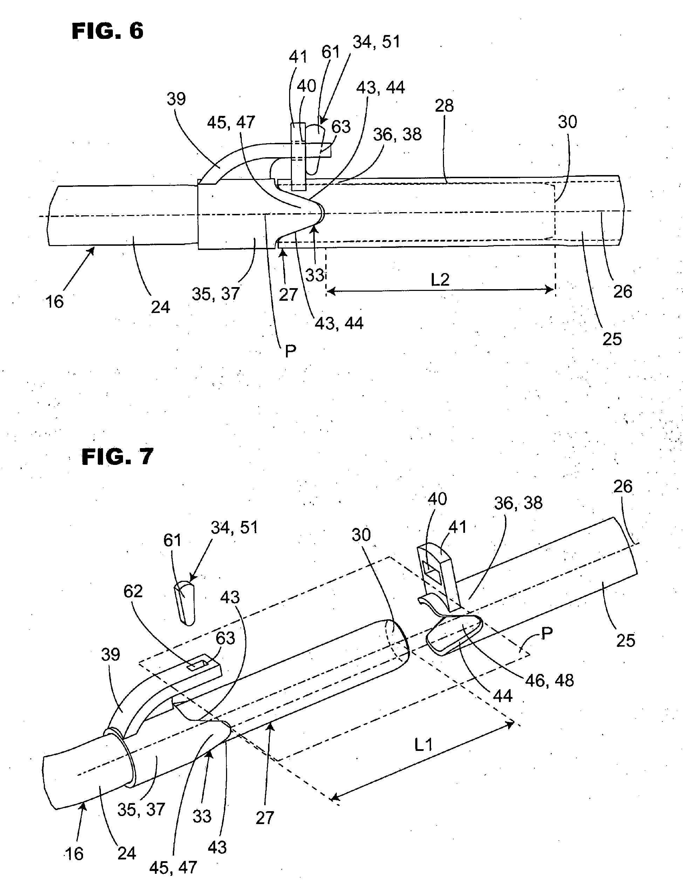

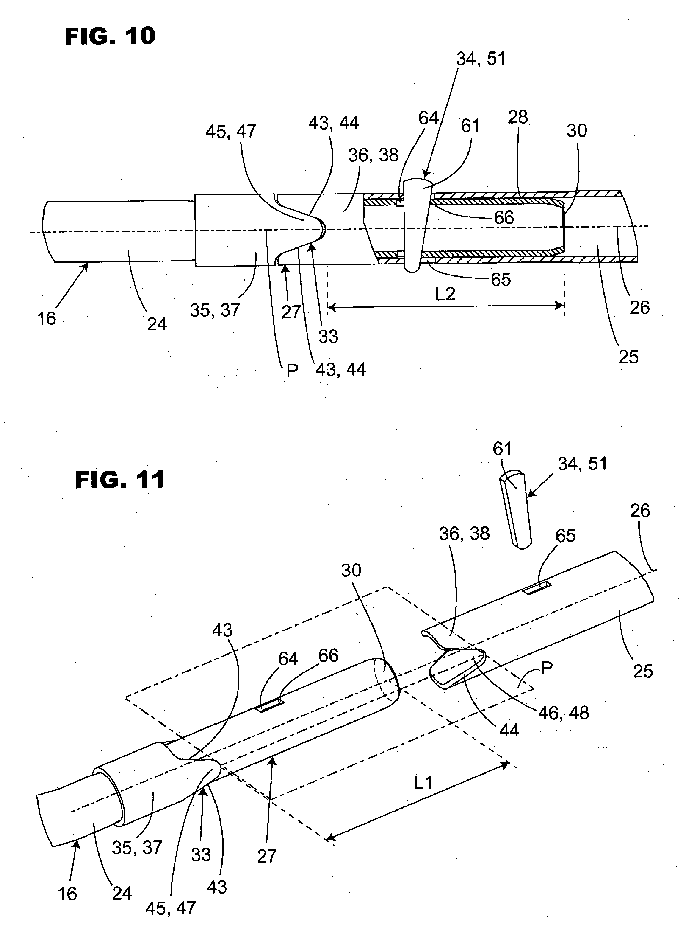

Avantageusement, dans cette position et suivant une direction parallèle audit axe (26) et orientée soit de ladite première partie (24) vers ladite deuxième partie (25), soit de ladite deuxième partie (25) vers ladite première partie (24), au moins l'une desdites premières faces d'appui (43) et au moins l'une desdites deuxièmes faces d'appui (44) sont dirigées vers un plan (P) passant par ledit axe (26). Le plan (P) est représenté en perspective sur les figures 2 à 5, et en vue plane sur les figures 6 et 10 où il s'étend perpendiculairement au plan des vues concernées. Le plan (P) peut prendre des orientations différentes suivant les variantes de réalisation considérées, ainsi dans la quatrième variante de réalisation des figures 8 et 9, il correspond sensiblement au plan médian dudit moyen de tension (34). Tel que cela est représenté sur les figures 2 à 5 ainsi que 6 et 10, les premières faces d'appui (43) sont orientées d'une part de ladite première partie (24) vers ladite deuxième partie (25), d'autre part vers ledit plan (P). Les premières faces d'appui (43) coopèrent avec les deuxièmes faces d'appui (44) orientées de la même manière. Lesdites premières respectivement deuxièmes faces d'appui (43, 44) sont de plus réparties symétriquement par rapport audit plan (P). Dans la quatrième variante de réalisation des figures 8 et 9, les deuxièmes faces d'appui (44) sont orientées d'une part de ladite deuxième partie (25) vers ladite première partie (24), d'autre part vers ledit plan (P). Suivant d'autres formes de réalisation non représentées, il serait possible que ladite paire (47) comporte une première face d'appui (43) parallèle audit plan (P) et une première face d'appui (43) orientée en direction dudit plan (P). Alternativement, il serait envisageable que ladite paire (47) comporte des premières faces d'appui (43) orientées en direction dudit plan (P) et qui sont réparties de manière dissymétrique par rapport audit plan (P). Dans chacun de ces cas, ladite paire (48) de deuxièmes faces d'appui (44) serait conçue pour coopérer avec ladite paire (47) de premières faces d'appui (43). Par ailleurs, lesdites premières et deuxièmes faces d'appui (43, 44) peuvent être planes, courbes ou encore comporter plusieurs facettes adjacentes planes ou courbes. Dans le cas de faces planes, l'angle dudit V peut varier entre une valeur strictement positive et une valeur strictement inférieure à 180°.

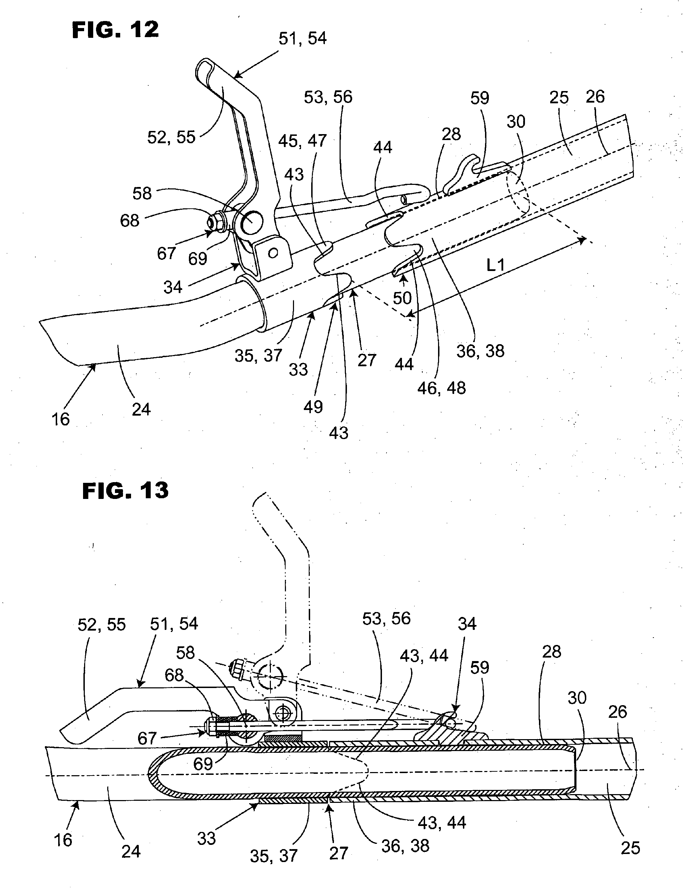

Une caractéristique avantageuse qui ressort de la sixième variante de réalisation de la figure 12 consiste en ce que ladite première portion d'appui (35) comporte une pluralité (49) de ladite au moins une paire (47) de premières faces d'appui (43), que ladite deuxième portion d'appui (36) comporte une pluralité (50) de ladite au moins une paire (48) de deuxièmes faces d'appui (44), et que lesdites pluralités (49, 50) coopèrent entre elles. Cette caractéristique présente l'avantage d'augmenter la surface totale de contact entre lesdites première et deuxième portions d'appui (35, 36). Cela signifie que pour une valeur donnée du couple de rotation à transmettre entre lesdites première et deuxième parties (24, 25), les pressions de contact, s'exerçant sur lesdites premières et deuxièmes faces d'appui (43, 44), sont plus faibles. En conséquence, un couple de rotation plus élevé peut être transmis et/ou l'usure desdites premières et deuxièmes faces d'appui (43, 44), notamment par matage, est réduite.

Préférentiellement, ledit moyen de tension (34) comporte un élément de tension (51) pouvant être lié à l'une desdites première et deuxième parties (24, 25). De fait, ledit élément de tension (51) peut être solidaire de l'une desdites première et deuxième parties (24, 25). Alternativement, il peut être conçu de manière à être lié à l'une desdites première et deuxième parties (24, 25) dans ladite position opérationnelle, et à en être détaché en vue du transport, de sorte qu'au transport, il ne reste pas en place sur ladite roue râteleuse (11 ou 12).

Préférentiellement, ledit élément de tension (51) comporte un élément de manoeuvre (52) et un élément de verrouillage (53, 53'), ledit élément de manoeuvre (52) agit sur ledit élément de verrouillage (53, 53'), et ledit élément de manoeuvre (52) est relié de manière non démontable audit élément de verrouillage (53, 53'). Un exemple de réalisation d'un tel élément de tension (51) est une genouillère du type de celle (54) illustrée sur les figures 2 et 3 ou de celle (54') illustrée sur la figure 14. La genouillère (54, 54') est attachée à ladite première partie (24) portant lesdits outils de travail (17). Un autre exemple de réalisation d'une genouillère est donné par les figures 15 et 16 où il apparaît que la genouillère (54) est attachée à ladite deuxième partie (25) liée audit rotor (15). Dans ces deux exemples de réalisation, la genouillère (54, 54') comporte un élément de manoeuvre (52) formé par un levier (55) et un élément de verrouillage (53, 53') formé par une tige (56) ou par un étrier (57). Ledit levier (55) est articulé sur ladite première ou deuxième partie (24 ou 25). Ladite tige (56) ou ledit étrier (57) est relié(e) audit levier (55) par une articulation (58) non démontable. Avantageusement, cette caractéristique propose à l'utilisateur un élément de tension (51) qui comprend l'élément de manoeuvre (52) requis pour placer ledit élément de tension (51) dans et hors de ladite position opérationnelle. L'utilisateur n'a donc pas besoin de recourir à des moyens externes, tels que des outils, pour manoeuvrer ledit élément de tension (51). De plus, il résulte de l'interaction entre ledit élément de manoeuvre (52) et ledit élément de verrouillage (53, 53') une grande facilité d'utilisation.

Ledit moyen de tension (34), comportant un élément de tension (51) pouvant être lié à l'une desdites première et deuxième parties (24, 25), peut en sus comporter un élément d'arrêt (59) lié à l'autre desdites première et deuxième parties (24, 25), et ledit élément d'arrêt (59) coopère avec ledit élément de tension (51). Ainsi, qu'il ressort notamment des figures 2 à 5, ledit élément d'arrêt (59) peut être formé par un crochet. Sur les figures 15 à 17, ledit élément d'arrêt (59) est formé par un doigt.

Préférentiellement, ledit élément de tension (51) comporte une genouillère (54, 54'). Dans la première variante de réalisation des figures 2 et 3, la genouillère (54) comporte une tige (56) dont l'extrémité recourbée est conçue pour coopérer avec ledit élément d'arrêt (59). Dans la quatrième variante de réalisation représentée sur les figures 8 et 9, la languette (39) comporte une extrémité en forme de crochet à laquelle la tige (56) de la genouillère (54) peut s'accrocher. Dans la septième variante de réalisation de la figure 14, la genouillère (54') comporte un étrier (57) qui peut s'accrocher audit élément d'arrêt (59).

Ledit élément de tension (51) peut également comporter un ressort de traction (60). Cette caractéristique apparaît dans la deuxième variante de réalisation illustrée par les figures 4 et 5. Dans cette variante de réalisation, une extrémité dudit ressort de traction (60) est liée, de manière détachable ou non, à un crochet solidaire de ladite première partie (24), tandis que l'autre extrémité coopère avec un crochet solidaire de ladite deuxième partie (25) en vue du placement dudit ressort de traction (60) dans ladite position opérationnelle où il est étiré.

Ledit élément de tension (51) peut également comporter une clavette inclinée transversale (61), dont des exemples de réalisation sont donnés sur les figures 6 et 7 ainsi que 10 et 11. Sur les figures 6 et 7, ladite première partie (24) comporte une languette (39) qui s'engage à l'intérieur d'une fente (40) pratiquée dans une plaquette (41) solidaire de ladite deuxième partie (25). Ladite languette (39) comporte une ouverture (62) qui la traverse suivant une direction perpendiculaire audit axe (26). Ladite ouverture (62) comporte une face inclinée (63). Après avoir emboîté ladite première partie (24) dans ladite deuxième partie (25), de sorte que les pointes (45) coopèrent avec les creux (46), ladite clavette inclinée transversale (61) est disposée dans ladite ouverture (62). Lorsqu'elle est poussée en direction dudit axe (26), elle prend appui d'une part sur ladite plaquette (41), d'autre part sur ladite face inclinée (63) et elle rapproche lesdites première et deuxième parties (24, 25) l'une vers l'autre jusqu'au point où leurs faces d'appui (43, 44) respectives sont en contact entre elles. Ledit effort est d'autant plus élevé que ladite clavette inclinée transversale (61) est plus enfoncée dans ladite ouverture (62). Dans la cinquième variante de réalisation illustrée par les figures 10 et 11, chacune desdites première et deuxième parties (24, 25) comporte un trou (64, 65) débouchant de section rectangulaire qui s'étend perpendiculairement audit axe (26). Le trou (64) pratiqué dans ladite première partie (24) comporte une face inclinée (66). Dans ladite position opérationnelle, une clavette inclinée transversale (61) s'engage dans lesdits trous (64, 65) et prend appui sur eux. En raison de la face inclinée (66) susnommée, lesdites première et deuxième parties (24, 25) sont rapprochées axialement et mises sous tension axiale l'une contre l'autre.

Préférentiellement, ledit moyen de tension (34) peut être manoeuvré sans outil. C'est notamment le cas lorsque ledit moyen de tension (34) comporte ladite genouillère (54, 54').

Préférentiellement, ledit moyen de tension (34) comporte un moyen de réglage (67) permettant d'ajuster ledit effort. En effet, lors du fonctionnement de la machine, il peut se produire une usure, notamment par matage, desdites au moins une première face d'appui (43) et au moins une deuxième face d'appui (44). Il en résulte un rapprochement axial desdites première et deuxième parties (24, 25) l'une vers l'autre et une baisse dudit effort exercé par ledit moyen de tension (34). Dans ce cas, l'utilisateur peut agir sur ledit moyen de réglage (67) de manière à maintenir ledit effort à une valeur sensiblement constante dans le temps. Dans la première variante de réalisation des figures 2 et 3, la genouillère (54) comporte une tige (56) filetée dont l'extrémité est recourbée et qui est articulée à un levier (55). Lors du déplacement de la genouillère (54) vers ladite position opérationnelle, la tige (56) filetée est retenue par un écrou (68) qui s'appuie contre une bague (69). Une représentation plus détaillée du mécanisme est donnée à la figure 13. Sur cette figure, la genouillère (54) est illustrée en trait plein dans ladite position opérationnelle, et en trait mixte dans une position de déverrouillage. Une légère déformation de ladite genouillère (54) est requise pour qu'elle puisse être placée dans ladite position opérationnelle. A cet effet, la bague (69) est de préférence réalisée en matériau élastique. Alternativement, l'extrémité recourbée de la tige (56) filetée peut être conçue de manière à accepter cette déformation. Telle qu'elle est représentée sur la figure 14, la genouillère (54') ne comporte pas de tige filetée mais un étrier (57) réalisé en acier à ressort et qui est articulé sur le levier (55). La forme dudit étrier (57) est conçue de sorte qu'il puisse se déformer lors du placement de la genouillère (54') dans ladite position opérationnelle.

Ledit moyen de réglage (67) comporte de préférence ledit écrou (68) qui coopère avec ladite tige (56) filetée. Cette caractéristique apparaît notamment dans la première variante de réalisation. En agissant sur ledit écrou (68), ladite tige (56) filetée est déplacée de sorte que dans ladite position opérationnelle, elle exerce sur ledit élément d'arrêt (59) un effort de traction plus ou moins important.

Ainsi, qu'il ressort de la figure 14, ledit moyen de réglage (67) peut comporter une bride (70) pouvant être déplacée sur l'une desdites première et deuxième parties (24, 25) suivant ledit axe (26). En effet, dans cette variante de réalisation, la position de l'étrier (57) par rapport au levier (55) ne peut pas être ajustée. En conséquence, le levier (55) est articulé sur ladite bride (70), laquelle peut être serrée à l'endroit souhaité sur ladite première partie (24) au moyen d'une vis (71).

D'autres formes de réalisation dudit moyen de réglage, non représentées, restent possibles. Par exemple, ledit moyen de réglage pourrait permettre de déplacer ledit élément d'arrêt le long de ladite première ou deuxième partie à laquelle il est lié.

De préférence, ledit effort comporte une composante orientée suivant ledit axe (26). Cette caractéristique ressort clairement des figures 2, 4, 6, 8, 10 et 15. Dans la huitième variante de réalisation des figures 15 et 16, l'orientation dudit effort évolue en même temps que lesdites première et deuxième parties (24, 25) sont pivotées en direction l'une de l'autre sous l'effet dudit moyen de tension (34). Néanmoins, dans ladite position opérationnelle illustrée à la figure 15, ledit effort est orienté suivant ledit axe (26).

Tel qu'il a déjà été évoqué, ledit dispositif d'accouplement (27) peut comporter une liaison pivotante (29) autorisant ladite première partie (24) à pivoter par rapport à ladite deuxième partie (25) suivant une direction sensiblement perpendiculaire audit axe (26). Cette caractéristique apparaît dans les variantes de réalisation représentées sur les figures 15 à 17. Elle permet notamment, en vue du transport, de rabattre ladite première partie (24) portant lesdits outils de travail (17) sur ladite deuxième partie (25) liée audit rotor (15), de sorte que l'encombrement de ladite roue râteleuse (11, 12) est réduit.

En particulier, il peut être prévu que ladite liaison pivotante (29) relie lesdites première et deuxième parties (24, 25) entre elles de manière inséparable. Cette caractéristique est présente dans la huitième variante de réalisation des figures 15 et 16.

Néanmoins, il peut aussi être prévu que ladite liaison pivotante (29) autorise ladite première partie (24) à être séparée de ladite deuxième partie (25) sans outil. Ainsi, tel que cela est représenté à la figure 17, ladite première partie (24) comporte une forme recourbée (72) qui peut s'emboîter suivant un axe de pivotement (73) dans une autre forme recourbée (74) de ladite deuxième partie (25). Après leur emboîtement, lesdites formes recourbées (72, 74) réalisent une charnière.

Alternativement, ledit moyen de butée (33) peut comporter une liaison coulissante (28) autorisant un coulissement de ladite première partie (24) par rapport à ladite deuxième partie (25) suivant ledit axe (26). Cette caractéristique apparaît dans les variantes de réalisation représentées sur les figures 2 à 14. Dans la deuxième variante de réalisation illustrée par les figures 4 et 5, lesdites première et deuxième portions d'appui (35, 36) présentent respectivement une seule première face d'appui (43) et une seule deuxième face d'appui (44) inclinées par rapport audit axe (26). Il en résulte que dans ladite position opérationnelle, ledit effort comporte une première composante orientée suivant ledit axe (26) et une deuxième composante orientée perpendiculairement audit axe (26). Dans cette variante de réalisation, ladite liaison coulissante (28) reprend partiellement ladite deuxième composante, sans quoi lesdites première et deuxième faces d'appui (43, 44) glisseraient l'une sur l'autre sous l'action dudit effort.

Une caractéristique avantageuse qui ressort en particulier des figures 2 à 5 prévoit que ladite première partie (24) comporte une première extrémité (30) dirigée vers ledit rotor (15) et une première longueur (L1) s'étendant à partir de ladite première extrémité (30) en direction desdits outils de travail (17), que ladite première portion d'appui (35) est distante de ladite première longueur (L1) par rapport à ladite première extrémité (30), et que ladite liaison coulissante (28) est formée par une fraction de ladite première longueur (L1) qui s'engage à l'intérieur d'une longueur (L2) de ladite deuxième partie (25).

La caractéristique avantageuse décrite ci-avant prévoit de préférence que ladite deuxième partie (25) comporte une deuxième extrémité (38) orientée vers lesdits outils de travail (17) et que ladite deuxième portion d'appui (36) forme ladite deuxième extrémité (38).

Inversement, suivant la quatrième variante de réalisation illustrée par les figures 8 et 9, il est possible que ladite deuxième partie (25) comporte une deuxième extrémité (38) dirigée vers lesdits outils de travail (17) et une deuxième longueur (L2') s'étendant à partir de ladite deuxième extrémité (38) en direction dudit rotor (15), que ladite deuxième portion d'appui (36) est distante de ladite deuxième longueur (L2') de ladite deuxième extrémité (38), et que ladite liaison coulissante (28) est formée par une fraction de ladite deuxième longueur (L2') qui s'engage à l'intérieur d'une longueur (L1') de ladite première partie (24).

Dans ce cas, il est avantageux que ladite première partie (24) comporte une première extrémité (30) orientée vers ledit rotor (15) et que ladite première portion d'appui (35) forme ladite première extrémité (30).

La description précédente se rapporte à une andaineuse de végétaux couchés sur le sol munie d'au moins une roue râteleuse dont l'axe de rotation est de préférence vertical en position de travail. Toutefois, l'invention peut aussi se rapporter à une faneuse munie, en lieu et place de ladite au moins une roue râteleuse, d'au moins une roue de fanage dont l'axe de rotation est par exemple incliné dans la direction d'avancement. Plus généralement, l'invention concerne toute machine de fenaison comportant au moins un rotor muni de bras portant des outils de travail. Une telle machine peut par exemple être une andaineuse, une presse ou une auto-chargeuse munie d'un organe de ramassage à doigts du type « pick-up » et qui comporte un rotor conforme à l'invention disposé par exemple à l'une des extrémités latérales dudit organe de ramassage. L'axe de rotation dudit rotor peut être disposé dans un plan vertical ou dans un plan horizontal.

Il est bien évident que l'invention n'est pas limitée aux formes de réalisation décrites ci-dessus et représentées sur les figures annexées. Des modifications restent possibles, notamment en ce qui concerne la constitution ou le nombre des divers éléments ou par substitution d'équivalents techniques, sans pour autant sortir du domaine de protection.

## Revendications

1. Machine de fenaison comportant au moins un rotor (15) muni de bras (16) portant des outils de travail (17), au moins l'un desdits bras (16) comportant au moins deux parties, une première partie (24) portant lesdits outils de travail (17) ainsi qu'une deuxième partie (25) liée audit rotor (15), lesdites première et deuxième parties (24, 25) pouvant être reliées entre elles au moyen d'un dispositif d'accouplement (27) autorisant la transmission de l'une vers l'autre desdites première et deuxième parties (24, 25) d'un couple de rotation autour d'un axe (26) orienté suivant une direction longitudinale de ladite deuxième partie (25), ledit dispositif d'accouplement (27) comprenant un moyen de butée (33) et un moyen de tension (34), ledit moyen de tension (34) pouvant être placé dans une position opérationnelle où ledit moyen de tension (34) exerce sur ledit moyen de butée (33) un effort orienté de l'une vers l'autre desdites première et deuxième parties (24, 25), de sorte que dans ladite position opérationnelle, ladite première partie (24) est, au moins suivant une direction parallèle audit axe (26), immobile par rapport à ladite deuxième partie (25), ledit moyen de butée (33) comportant au moins deux portions d'appui, une première portion d'appui (35) liée à ladite première partie (24) et une deuxième portion d'appui (36) liée à ladite deuxième partie (25), ***caractérisée en ce que*** ladite première portion d'appui (35) comporte au moins une première face d'appui (43) inclinée par rapport audit axe (26), que ladite deuxième portion d'appui (36) comporte au moins une deuxième face d'appui (44) inclinée par rapport audit axe (26), et que dans ladite position opérationnelle, ledit effort maintient en contact ladite au moins une première face d'appui (43) contre ladite au moins une deuxième face d'appui (44) de sorte que, dans ladite position opérationnelle, l'immobilisation de ladite première partie (24) par rapport à ladite deuxième partie (25) suivant ledit axe (26) entraîne simultanément une immobilisation de ladite première partie (24) par rapport à ladite deuxième partie (25) autour dudit axe (26).

2. Machine de fenaison suivant la revendication 1, ***caractérisée en ce que*** ladite première portion d'appui (35) comprend au moins une paire (47) de premières faces d'appui (43) inclinées par rapport audit axe (26) de manière à former un V, que ladite deuxième portion d'appui (36) comprend au moins une paire (48) de deuxièmes faces d'appui (44) inclinées par rapport audit axe (26) de manière à former un V, et que dans ladite position opérationnelle, ladite au moins une paire (47) de premières faces d'appui (43) coopère avec ladite au moins une paire (48) de deuxièmes faces d'appui (44).

3. Machine de fenaison suivant la revendication 2, ***caractérisée en ce que*** dans ladite position opérationnelle et suivant une direction parallèle audit axe (26) et orientée de ladite première partie (24) vers ladite deuxième partie (25), au moins l'une desdites premières faces d'appui (43) et au moins l'une desdites deuxièmes faces d'appui (44) sont dirigées vers un plan (P) passant par ledit axe (26).

4. Machine de fenaison suivant la revendication 2, ***caractérisée en ce que*** dans ladite position opérationnelle et suivant une direction parallèle audit axe (26) et orientée de ladite deuxième partie (25) vers ladite première partie (24), au moins l'une desdites premières faces d'appui (43) et au moins l'une desdites deuxièmes faces d'appui (44) sont dirigées vers un plan (P) passant par ledit axe (26).

5. Machine de fenaison suivant l'une quelconque des revendications 2 à 4, ***caractérisée en ce que*** ladite première portion d'appui (35) comporte une pluralité (49) de ladite au moins une paire (47) de premières faces d'appui (43), que ladite deuxième portion d'appui (36) comporte une pluralité (50) de ladite au moins une paire (48) de deuxièmes faces d'appui (44), et que lesdites pluralités (49, 50) coopèrent entre elles.

6. Machine de fenaison suivant l'une quelconque des revendications précédentes, ***caractérisée en ce que*** ledit moyen de tension (34) comporte un élément de tension (51) pouvant être lié à l'une desdites première et deuxième parties (24, 25).

7. Machine de fenaison suivant la revendication 6, ***caractérisée en ce que*** ledit élément de tension (51) comporte un élément de manoeuvre (52) et un élément de verrouillage (53, 53'), que ledit élément de manoeuvre (52) agit sur ledit élément de verrouillage (53, 53'), et que ledit élément de manoeuvre (52) est relié de manière non démontable audit élément de verrouillage (53, 53').

8. Machine de fenaison suivant la revendication 6 ou 7, ***caractérisée en ce que*** ledit moyen de tension (34) comporte un élément d'arrêt (59) lié à l'autre desdites première et deuxième parties (24, 25) et qui coopère avec ledit élément de tension (51).

9. Machine de fenaison suivant l'une quelconque des revendications 6 à 8, ***caractérisée en ce que*** ledit élément de tension (51) comporte une genouillère (54, 54').

10. Machine de fenaison suivant l'une quelconque des revendications 6 à 8, ***caractérisée en ce que*** ledit élément de tension (51) comporte un ressort de traction (60).

11. Machine de fenaison suivant l'une quelconque des revendications 6 à 8, ***caractérisée en ce que*** ledit élément de tension (51) comporte une clavette inclinée transversale (61).

12. Machine de fenaison suivant l'une quelconque des revendications précédentes, ***caractérisée en ce que*** ledit moyen de tension (34) peut être manoeuvré sans outil.

13. Machine de fenaison suivant l'une quelconque des revendications précédentes, ***caractérisée en ce que*** ledit moyen de tension (34) comporte un moyen de réglage (67) permettant d'ajuster ledit effort.

14. Machine de fenaison suivant les revendications 9 et 13, ***caractérisée en ce que*** ledit moyen de réglage (67) comporte un écrou (68) qui coopère avec une tige (56) filetée.

15. Machine de fenaison suivant les revendications 9 et 13, ***caractérisée en ce que*** ledit moyen de réglage (67) comporte une bride (70) pouvant être déplacée sur l'une desdites première et deuxième parties (24, 25) suivant ledit axe (26).

16. Machine de fenaison suivant l'une quelconque des revendications précédentes, ***caractérisée en ce que*** ledit effort comporte une composante orientée suivant ledit axe (26).

17. Machine de fenaison suivant l'une quelconque des revendications précédentes, ***caractérisée en ce que*** ledit dispositif d'accouplement (27) comporte une liaison pivotante (29) autorisant ladite première partie (24) à pivoter par rapport à ladite deuxième partie (25) suivant une direction sensiblement perpendiculaire audit axe (26).

18. Machine de fenaison suivant la revendication 17, ***caractérisée en ce que*** ladite liaison pivotante (29) relie lesdites première et deuxième parties (24, 25) entre elles de manière inséparable.

19. Machine de fenaison suivant la revendication 17, ***caractérisée en ce que*** ladite liaison pivotante (29) autorise ladite première partie (24) à être séparée de ladite deuxième partie (25) sans outil.

20. Machine de fenaison suivant l'une quelconque des revendications 1 à 16, ***caractérisée en ce que*** ledit moyen de butée (33) comporte une liaison coulissante (28) autorisant un coulissement de ladite première partie (24) par rapport à ladite deuxième partie (25) suivant ledit axe (26).

21. Machine de fenaison suivant la revendication 20, ***caractérisés en ce que*** ladite première partie (24) comporte une première extrémité (30) dirigée vers ledit rotor (15) et une première longueur (L1) s'étendant à partir de ladite première extrémité (30) en direction desdits outils de travail (17), que ladite première portion d'appui (35) est distante de ladite première longueur (L1) par rapport à ladite première extrémité (30), et que ladite liaison coulissante (28) est formée par une fraction de ladite première longueur (L1) qui s'engage à l'intérieur d'une longueur (L2) de ladite deuxième partie (25).

22. Machine de fenaison suivant la revendication 21, ***caractérisée en ce que*** ladite deuxième partie (25) comporte une deuxième extrémité (38) orientée vers lesdits outils de travail (17) et que ladite deuxième portion d'appui (36) forme ladite deuxième extrémité (38).

23. Machine de fenaison suivant la revendication 20, ***caractérisée en ce que*** ladite deuxième partie (25) comporte une deuxième extrémité (38) dirigée vers lesdits outils de travail (17) et une deuxième longueur (L2') s'étendant à partir de ladite deuxième extrémité (38) en direction dudit rotor (15), que ladite deuxième portion d'appui (36) est distante de ladite deuxième longueur (L2') de ladite deuxième extrémité (38), et que ladite liaison coulissante (28) est formée par une fraction de ladite deuxième longueur (L2') qui s'engage à l'intérieur d'une longueur (L1') de ladite première partie (24).

24. Machine de fenaison suivant la revendication 23, ***caractérisée en ce que*** ladite première partie (24) comporte une première extrémité (30) orientée vers ledit rotor (15) et que ladite première portion d'appui (35) forme ladite première extrémité (30).

## Patentansprüche

1. Heuwerbungsmaschine mit mindestens einem Rotor (15), der mit Armen (16) ausgestattet ist, die Arbeitswerkzeuge (17) tragen, wobei mindestens einer der Arme (16) mindestens zwei Teile umfasst, einen ersten Teil (24), der die Arbeitswerkzeuge (17) trägt, und einen zweiten Teil (25), der mit dem Rotor (15) verbunden ist, wobei die erste und zweite Teile (24, 25) mittels einer Kupplungsvorrichtung (27) miteinander verbunden werden können, welche die Übertragung eines Drehmoments um eine Achse (26), die gemäß einer Längsrichtung des zweiten Teils (25) ausgerichtet ist, von einem zum anderen der ersten und zweiten Teilen (24, 25) gewährt, wobei die Kupplungsvorrichtung (27) ein Anschlagmittel (33) und ein Spannmittel (34) umfasst, wobei das Spannmittel (34) in eine Betriebsstellung gebracht werden kann, wo das Spannmittel (34) auf das Anschlagmittel (33) eine Kraft ausübt, die von einem zum anderen der ersten und zweiten Teile (24, 25) gerichtet ist, so dass in der Betriebsstellung der erste Teil (24) mindestens gemäß einer zur Achse (26) parallelen Richtung in Bezug auf den zweiten Teil (25) festsitzend ist, wobei das Anschlagmittel (33) mindestens zwei Auflageabschnitte umfasst, einen ersten Auflageabschnitt (35), der mit dem ersten Teil (24) verbunden ist, und einen zweiten Auflageabschnitt (36), der mit dem zweiten Teil (25) verbunden ist, ***dadurch gekennzeichnet,* dass** der erste Auflageabschnitt (35) mindestens eine erste Auflagefläche (43) umfasst, die in Bezug auf die Achse (26) geneigt ist, dass der zweite Auflageabschnitt (36) mindestens eine zweite Auflagefläche (44) umfasst, die in Bezug auf die Achse (26) geneigt ist, und dass in der Betriebsstellung die Kraft die mindestens eine erste Auflagefläche (43) gegen die mindestens eine zweite Auflagefläche (44) in Kontakt hält, so dass in der Betriebsstellung die Blockierung des ersten Teils (24) in Bezug auf den zweiten Teil (25) gemäß der Achse (26) gleichzeitig eine Blockierung des ersten Teils (24) in Bezug auf den zweiten Teil (25) um die Achse (26) mit sich bringt.

2. Heuwerbungsmaschine nach Anspruch 1, ***dadurch gekennzeichnet,* dass** der erste Auflageabschnitt (35) mindestens ein Paar (47) erste Auflageflächen (43) umfasst, die in Bezug auf die Achse (26) geneigt sind, um ein V zu bilden, dass der zweite Auflageabschnitt (36) mindestens ein Paar (48) zweite Auflageflächen (44) umfasst, die in Bezug auf die Achse (26) geneigt sind, um ein V zu bilden, und dass in der Betriebsstellung das mindestens eine Paar (47) erster Auflageflächen (43) mit dem mindestens einen Paar (48) zweiter Auflageflächen (44) zusammenwirkt.

3. Heuwerbungsmaschine nach Anspruch 2, ***dadurch gekennzeichnet,* dass** in der Betriebsstellung und gemäß einer Richtung, die parallel zur Achse (26) verläuft und vom ersten Teil (24) zum zweiten Teil (25) ausgerichtet ist, mindestens eine der ersten Auflageflächen (43) und mindestens eine der zweiten Auflageflächen (44) zu einer Ebene (P) gerichtet sind, die durch die Achse (26) verläuft.

4. Heuwerbungsmaschine nach Anspruch 2, ***dadurch gekennzeichnet,* dass** in der Betriebsstellung und gemäß einer Richtung, die parallel zur Achse (26) verläuft und vom zweiten Teil (25) zum ersten Teil (24) ausgerichtet ist, mindestens eine der ersten Auflageflächen (43) und mindestens eine der zweiten Auflageflächen (44) zu einer Ebene (P) gerichtet sind, die durch die Achse (26) verläuft.

5. Heuwerbungsmaschine nach irgend einem der Ansprüche 2 bis 4, ***dadurch gekennzeichnet, dass*** der erste Auflageabschnitt (35) eine Mehrheit (49) des mindestens einen Paares (47) erster Auflageflächen (43) umfasst, dass der zweite Auflageabschnitt (36) eine Mehrheit (50) des mindestens einen Paares (48) zweiter Auflageflächen (44) umfasst, und dass die Mehrheiten (49, 50) untereinander zusammenwirken.

6. Heuwerbungsmaschine nach irgend einem der vorstehenden Ansprüche, ***dadurch gekennzeichnet,* dass** das Spannmittel (34) ein Spannelement (51) umfasst, das mit einem der ersten und zweiten Teile (24, 25) verbunden werden kann.

7. Heuwerbungsmaschine nach Anspruch 6, ***dadurch gekennzeichnet,* dass** das Spannelement (51) ein Betätigungselement (52) und ein Verriegelungselement (53, 53') umfasst, dass das Betätigungselement (52) auf das Verriegelungselement (53, 53') einwirkt, und dass das Betätigungselement (52) unzerlegbar mit dem Verriegelungselement (53, 53') verbunden ist.

8. Heuwerbungsmaschine nach Anspruch 6 oder 7, ***dadurch gekennzeichnet,* dass** das Spannmittel (34) ein Sperrelement (59) umfasst, das mit dem anderen der ersten und zweiten Teile (24, 25) verbunden ist und das mit dem Spannelement (51) zusammenwirkt.

9. Heuwerbungsmaschine nach irgend einem der Ansprüche 6 bis 8, ***dadurch gekennzeichnet,* dass** das Spannelement (51) ein Kniegelenk (54, 54') umfasst.

10. Heuwerbungsmaschine nach irgend einem der Ansprüche 6 bis 8, ***dadurch gekennzeichnet,* dass** das Spannelement (51) eine Zugfeder (60) umfasst.

11. Heuwerbungsmaschine nach irgend einem der Ansprüche 6 bis 8, ***dadurch gekennzeichnet,* dass** das Spannelement (51) einen geneigten, quer verlaufenden Keil (61) umfasst.

12. Heuwerbungsmaschine nach irgend einem der vorstehenden Ansprüche, ***dadurch gekennzeichnet,* dass** das Spannmittel (34) ohne Werkzeug betätigt werden kann.

13. Heuwerbungsmaschine nach irgend einem der vorstehenden Ansprüche, ***dadurch gekennzeichnet,* dass** das Spannmittel (34) ein Einstellmittel (67) umfasst, das es ermöglicht, die Kraft anzupassen.

14. Heuwerbungsmaschine nach den Ansprüche 9 und 13, ***dadurch gekennzeichnet,* dass** das Einstellmittel (67) eine Mutter (68) umfasst, die mit einer Gewindestange (56) zusammenwirkt.

15. Heuwerbungsmaschine nach den Ansprüche 9 und 13, ***dadurch gekennzeichnet,* dass** das Einstellmittel (67) einen Flansch (70) umfasst, der auf einem der ersten und zweiten Teile (24, 25) gemäß der Achse (26) verschoben werden kann.

16. Heuwerbungsmaschine nach irgend einem der vorstehenden Ansprüche, ***dadurch gekennzeichnet,* dass** die Kraft eine Komponente umfasst, die gemäß der Achse (26) ausgerichtet ist.

17. Heuwerbungsmaschine nach irgend einem der vorstehenden Ansprüche, ***dadurch gekennzeichnet,* dass** die Kupplungsvorrichtung (27) eine Schwenkverbindung (29) umfasst, die es dem ersten Teil (24) gewährt, in Bezug auf den zweiten Teil (25) gemäß einer Richtung zu schwenken, die im Wesentlichen senkrecht zur Achse (26) verläuft.

18. Heuwerbungsmaschine nach Anspruch 17, ***dadurch gekennzeichnet,* dass** die Schwenkverbindung (29) die ersten und zweiten Teile (24, 25) untrennbar miteinander verbindet.

19. Heuwerbungsmaschine nach Anspruch 17, ***dadurch gekennzeichnet,* dass** es die Schwenkverbindung (29) gestattet, den ersten Teil (24) vom zweiten Teil (25) ohne Werkzeug zu trennen.

20. Heuwerbungsmaschine nach irgend einem der Ansprüche 1 bis 16, ***dadurch gekennzeichnet,* dass** das Anschlagmittel (33) eine Gleitverbindung (28) umfasst, die ein Gleiten des ersten Teils (24) in Bezug auf den zweiten Teil (25) gemäß der Achse (26) gestattet.

21. Heuwerbungsmaschine nach Anspruch 20, ***dadurch gekennzeichnet,* dass** der erste Teil (24) ein erstes Ende (30) umfasst, das zum Rotor (15) gerichtet ist, und eine erste Länge (L1), die sich vom ersten Ende (30) zu den Arbeitswerkzeugen (17) erstreckt, dass der erste Auflageabschnitt (35) von der ersten Länge (L1) in Bezug auf das erste Ende (30) beabstandet ist, und dass die Gleitverbindung (28) von einem Anteil der ersten Länge (L1) gebildet wird, die sich in eine Länge (L2) des zweiten Teils (25) einfügt.

22. Heuwerbungsmaschine nach Anspruch 21, ***dadurch gekennzeichnet,* dass** der zweite Teil (25) ein zweites Ende (38) umfasst, das zu den Arbeitswerkzeugen (17) gerichtet ist, und dass der zweite Auflageabschnitt (36) das zweite Ende (38) bildet.

23. Heuwerbungsmaschine nach Anspruch 20, ***dadurch gekennzeichnet,* dass** der zweite Teil (25) ein zweites Ende (38) umfasst, das zu den Arbeitswerkzeugen (17) gerichtet ist, und eine zweite Länge (L2'), die sich vom zweiten Ende (38) zum Rotor (15) ersteckt, dass der zweite Auflageabschnitt (36) von der zweiten Länge (L2') des zweiten Endes (38) beabstandet ist, und dass die Gleitverbindung (28) von einem Anteil der zweiten Länge (L2') gebildet wird, die sich in eine Länge (L1') des ersten Teils (24) einfügt.

24. Heuwerbungsmaschine nach Anspruch 23, ***dadurch gekennzeichnet,* dass** der erste Teil (24) ein erstes Ende (30) umfasst, das zum Rotor (15) gerichtet ist, und dass der erste Auflageabschnitt (35) das erste Ende (30) bildet.

## Claims

1. Haymaking machine including at least one rotor (15) fitted with arms (16) carrying work tools (17), at least one of the said arms (16) including at least two sections, a first section (24) carrying the said work tools (17) and a second section (25) connected to the said rotor (15), the said first and second sections (24, 25) being able to be connected to each other by means of a hitching device (27) allowing a torque to be transmitted from one to the other of the said first and second sections (24, 25) around an axis (26) oriented in a longitudinal direction of the said second section (25), the said hitching device (27) including a stop means (33) and a tension means (34), the said tension means (34) being able to be placed in an operating position in which the said tension means (34) exerts on the said stop means (33) a force oriented from one to the other of the said first and second sections (24, 25), so that in the said operating position, the said first section (24) is, at least in a direction parallel to the said axis (26), stationary relative to the said second section (25), the said stop means (33) including at least two support parts, a first support part (35) connected to the said first section (24) and a second support part (36) connected to the said second section (25), ***characterised in* that** the said first support part (35) includes at least one first support surface (43) that is tilted relative to the said axis (26), that the said second support part (36) includes at least one second support surface (44) that is tilted relative to the said axis (26) and that in the said operating position, the said force maintains in contact the said at least one first support surface (43) with the said at least one second support surface (44) so that, in the said operating position, the immobilisation of the said first section (24) relative to the said second section (25) along the said axis (26) simultaneously causes an immobilisation of the said first section (24) relative to the said second section (25) around the said axis (26).

2. Haymaking machine according to claim 1, ***characterised in* that** the said first support part (35) includes at least one pair (47) of first support surfaces (43) that are tilted relative to the said axis (26) so that they form a V, the said second support part (36) includes at least one pair (48) of second support surfaces (44) that are tilted relative to the said axis (26) so that they form a V, and that in the said operating position, the said at least one pair (47) of first support surfaces (43) cooperates with the said at least one pair (48) of second support surfaces (44).

3. Haymaking machine according to claim 2, ***characterised in* that** in the said operating position and in a direction parallel to the said axis (26) and oriented from the said first section (24) towards the said second section (25), at least one of the said first support surfaces (43) and at least one of the said second support surfaces (44) are directed in a plane (P) that passes through the said axis (26).

4. Haymaking machine according to claim 2, ***characterised in* that** in the said operating position and in a direction parallel to the said axis (26) and oriented from the said second section (25) towards the said first section (24), at least one of the said first support surfaces (43) and at least one of the said second support surfaces (44) are directed in a plane (P) that passes through the said axis (26).

5. Haymaking machine according to any one of the claims 2 to 4, ***characterised in* that** the said first support part (35) includes several (49) of the said at least one pair (47) of first support surfaces (43), that the said second support part (36) includes several (50) of the said at least one pair (48) of second support surfaces (44), and that the said several elements (49, 50) cooperate with each other.

6. Haymaking machine according to any one of the previous claims, ***characterised in* that** the said tension means (34) includes a tension element (51) that can be connected to one of the said first and second sections (24, 25).

7. Haymaking machine according to claim 6, ***characterised in* that** the said tension element (51) includes an operating element (52) and a locking element (53, 53'), that the said operating element (52) acts on the said locking element (53, 53') and that the said operating element (52) is connected in a non-removable way to the said locking element (53, 53').

8. Haymaking machine according to claim 6 or 7, ***characterised in* that** the said tension means (34) includes a stop means (59) connected to the other of the said first and second sections (24, 25) and which cooperates with the said tension element (51).

9. Haymaking machine according to any one of the claims 6 to 8, ***characterised in* that** the said tension element (51) includes a knuckle (54, 54').

10. Haymaking machine according to any one of the claims 6 to 8, ***characterised in* that** the said tension element (51) includes a tension spring (60).

11. Haymaking machine according to any one of the claims 6 to 8, ***characterised in* that** the said tension element (51) includes a pin (61) running at right angles.

12. Haymaking machine according to any one of the previous claims, ***characterised in* that** the said tension element (34) can be operated without a tool.

13. Haymaking machine according to any one of the previous claims, ***characterised in* that** the said tension element (34) includes an adjustment means (67) for adjusting the said force.

14. Haymaking machine according to claims 9 and 13, ***characterised in* that** the said adjustment means (67) includes a nut (68) that cooperates with a threaded rod (56).

15. Haymaking machine according to claims 9 and 13, ***characterised in* that** the said adjustment means (67) includes a flange (70) that can be moved on one of the said first and second sections (24, 25) along the said axis (26).

16. Haymaking machine according to any one of the previous claims, ***characterised in* that** the said force includes a component oriented along the said axis (26).

17. Haymaking machine according to any one of the previous claims, ***characterised in* that** the said hitching device (27) includes a pivot connection (29) that allows the said first section (24) to pivot relative to the said second section (25) in a direction substantially perpendicular to the said axis (26).

18. Haymaking machine according to claim 17, ***characterised in* that** the said pivot connection (29) connects the said first and second sections (24, 25) to each other inseparably.

19. Haymaking machine according to claim 17, ***characterised in* that** the said pivot connection (29) allows the said first section (24) to be separated from the said second section (25) without a tool.

20. Haymaking machine according to any one of the claims 1 to 16, ***characterised in* that** the said stop means (33) includes a sliding connection (28) that allows the said first section (24) to slide relative to the said second section (25) along the said axis (26).

21. Haymaking machine according to claim 20, ***characterised in* that** the said first section (24) includes a first end (30) directed towards the said rotor (15) and a first length (L1) extending from the said first end (30) in the direction of the said work tools (17), that the said first support part (35) is distant from the said first length (L1) relative to the said first end (30) and that the said sliding connection (28) is formed by a fraction of the said first length (L1) engaging inside a length (L2) of the said second section (25).

22. Haymaking machine according to claim 21, ***characterised in* that** the said second section (25) includes a second end (38) oriented towards the said work tools (17) and that the said second support part (36) forms the said second end (38).

23. Haymaking machine according to claim 20, ***characterised in that*** the said second section (25) includes a second end (38) directed towards the said work tools (17) and a second length (L2') extending from the said second end (38) in the direction of the said rotor (15), that the said second support part (36) is distant from the said second length (L2') of the said second end (38) and that the said sliding connection (28) is formed by a fraction of the said second length (L2') engaging inside a length (L1') of the said first section (24).

24. Haymaking machine according to claim 23, ***characterised in* that** the said first section (24) has a first end (30) oriented towards the said rotor (15) and that the said first support part (35) forms the said first end (30).
